# EUROPEAN PATENT APPLICATION

(11) **EP 4 691 254 A1**
(43) Date of publication of application: **11.02.2026**
(21) Application number: 24779242.7
(22) Date of filing: 07.03.2024
(51) Int. Cl.: A23J 3/14, A23J 3/22, A23J 3/26, A23L 5/00, A23L 11/00

(54) **TEXTURIZED FIBROUS PLANT PROTEIN, DEFIBRATED PRODUCT OF TEXTURIZED FIBROUS PLANT PROTEIN, AND METHOD FOR IMPROVING DEFIBRATION RESISTANCE OF TEXTURIZED FIBROUS PLANT PROTEIN**

(30) Priority: 28.03.2023 JP 2023051381
(71) Applicant: Nissui Corporation, Tokyo 105-8676 (JP)
(72) Inventor: YOKOTA Nobuhiro, Hachioji-shi, Tokyo 192-0991 (JP); HORIUCHI Yu, Hachioji-shi, Tokyo 192-0991 (JP); SHIGEMOTO Ayane, Hachioji-shi, Tokyo 192-0991 (JP)
(74) Representative: Mewburn Ellis LLP
(86) International application number: PCT/JP2024/008704
(87) International publication number: WO 2024/203108

(57) **Abstract**

Provided is a texturized fibrous vegetable protein with improved defibration resistance, or a method for improving defibration resistance of a texturized fibrous vegetable protein.

A defibrated product of a texturized fibrous vegetable protein containing a protein derived from pea, and a salt of a monovalent cation, wherein the salt of a monovalent cation is comprised in an amount of 0.1 mass% or more and less than 2 mass% with respect to the protein derived from pea, or a method for improving defibration resistance of a texturized fibrous vegetable protein, including the step of adding a salt of a monovalent cation in an amount of 0.1 mass% or more and less than 2 mass% with respect to the vegetable protein.

## Description

### Technical Field

The present disclosure relates to a texturized fibrous vegetable protein, a defibrated product of a texturized fibrous vegetable protein, and a method for improving defibration resistance of a texturized fibrous vegetable protein.

### Background Art

In recent years, eating habits suppressing consumption of animal materials have been spreading all over the world from the viewpoint of increasing health awareness and reducing environmental burden. As a part thereof, there is an increasing demand for plant-based foods in which some or all of animal materials are substituted with vegetable proteins. Texturized vegetable proteins (texturized vegetable proteins such as granular vegetable proteins and fibrous vegetable proteins), which are mainly derived from soybean, are utilized in various processed foods as substitutes mainly for livestock meat (for example, Patent Literatures 1 and 2).

On the other hand, from the viewpoint of utilizing more various raw materials and from the viewpoint of a difference in palatability of flavor imparted to food, a texturized vegetable protein derived from pea may be used instead of soybean. There are also increasing cases where the texturized vegetable protein derived from pea is commercialized as a cooking material before processing so as to be easily cooked at home. However, many of them are minced or block. What is referred to as a fibrous vegetable protein is actually also a massive material having a bound fibrous tissue, and there is no material (defibrated product) that is individualized while maintaining the fiber length to some extent.

One of the reasons why the defibrated product of the fibrous vegetable protein is not commercially available as a cooking material is that it was difficult to fibrillate the fibrous vegetable protein without excessively shortening the fiber length. If a defibrated product of a fibrous vegetable protein can be effectively obtained, the defibrated product can impart excellent texture to food, and can be useful as a cooking material that substitutes various fibrous food materials regardless of animal or plant origin, such as chicken, fish meat, and vegetables. For this purpose, it is desired to improve defibration resistance of the fibrous vegetable protein.

### Document List

### Patent Literatures

Patent Literature 1: Japanese Patent Application Publication No. 2010-200627
Patent Literature 2: Japanese Patent Application Publication No. 2022-117184

### Summary of Invention

### Technical Problem

The present disclosure relates to providing a texturized fibrous vegetable protein with improved defibration resistance, and to providing a method for improving defibration resistance of a texturized fibrous vegetable protein.

### Solution to Problem

The texturized fibrous vegetable protein of the present disclosure contains a protein derived from pea and a salt of a monovalent cation, and contains the salt of a monovalent cation in an amount of 0.1 mass% or more and less than 2 mass% with respect to the protein derived from pea.

The defibrated product of a texturized fibrous vegetable protein of the present disclosure contains a protein derived from pea and a salt of a monovalent cation, and contains the salt of a monovalent cation in an amount of 0.1 mass% or more and less than 2 mass% with respect to the protein derived from pea.

The method for improving defibration resistance of a texturized fibrous vegetable protein of the present disclosure includes a step of adding a salt of a monovalent cation in an amount of 0.1 mass% or more and less than 2 mass% with respect to the vegetable protein.

### Brief Description of Drawings

[Fig. 1] A photograph showing an example of a texturized fibrous vegetable protein before defibration.
[Fig. 2] A photograph showing an example of a texturized fibrous vegetable protein after defibration.

### Description of Embodiments

### [Definition of Terms]

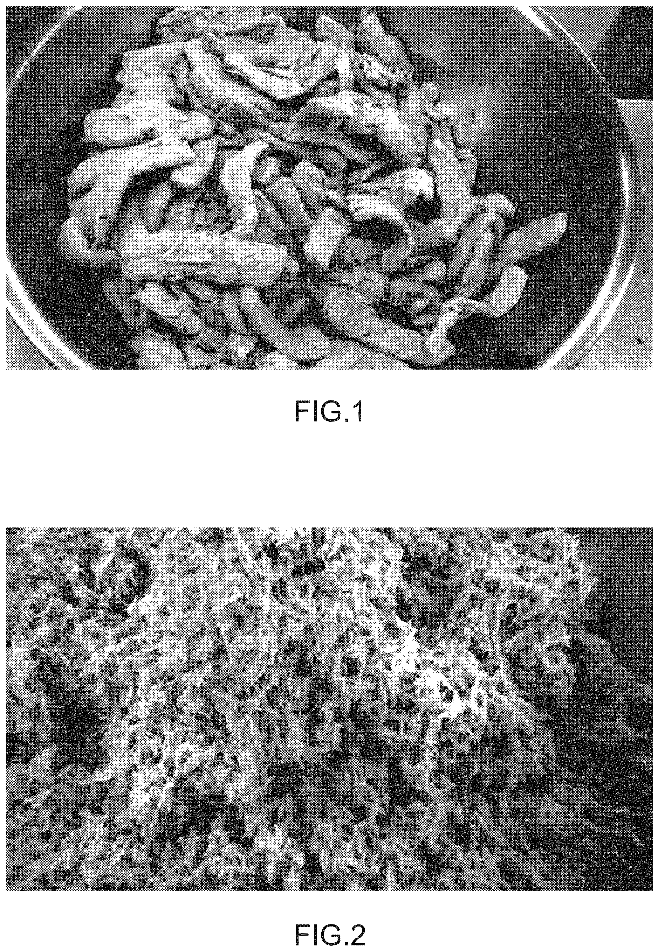

In the present disclosure, the "texturized fibrous vegetable protein" refers to a vegetable protein having a meat-like tissue, which is defined as a "fibrous vegetable protein" in the "Japanese Agricultural Standards for vegetable proteins" of the Ministry of Agriculture, Forestry and Fisheries. In the "Japanese Agricultural Standards for vegetable proteins" of the Ministry of Agriculture, Forestry and Fisheries, the "fibrous vegetable protein" is defined as "a vegetable protein which is formed into a fibrous form and has a meat-like tissue", and a "granular vegetable protein" is defined as "a vegetable protein which is formed into a granular or flake shape and has a meat-like tissue". A thread-like protein obtained by a method of extruding a raw material from small pores corresponding to a fiber diameter (so-called "spinning method") is not called a texturized vegetable protein. As shown in Fig. 1, a non-fibrillated texturized fibrous vegetable protein is referred to as "fibrous", but is actually a massive material having a bound fibrous tissue.

In the present disclosure, the "defibrated product" is obtained by fibrillating (unwinding) the bound fibrous tissue in the texturized fibrous vegetable protein and individualizing each fiber to such an extent that the fibers can be easily separated by hand or the like. Fig. 2 shows an example of the texturized fibrous vegetable protein after defibration.

In the present disclosure, the "number average length" is a value obtained by dividing a sum of all lengths of contained fibers by the number of the contained fibers in a specific fiber group containing a plurality of individualized fibers. The number average length can be calculated based on the dimension of the major axis of each fiber obtained when 100 fibers are randomly extracted from a defibrated product of a texturized fibrous vegetable protein, arranged on a plane, and photographed from directly above and image processed using "Visual Analyzer IRIS VA400" manufactured by Alpha M.O.S. Japan K.K., and ellipse approximation is performed.

In the present disclosure, the "number average width" is a value obtained by dividing a sum of all widths of contained fibers by the number of the contained fibers in a specific fiber group containing a plurality of individualized fibers. The number average width can be calculated based on the dimension of the minor axis of each fiber obtained when 100 fibers are randomly extracted from a defibrated product of a texturized fibrous vegetable protein, arranged on a plane, and photographed from directly above and image processed using "Visual Analyzer IRIS VA400" manufactured by Alpha M.O.S. Japan K.K., and ellipse approximation is performed.

In the present disclosure, the "aspect ratio" is a value obtained by dividing a length by a width in the individualized fiber. The aspect ratio can be calculated based on the dimension of the major axis and the dimension of the minor axis of fibers obtained when 100 fibers are randomly extracted from a defibrated product of a texturized fibrous vegetable protein, arranged on a plane, and photographed from directly above and image processed using "Visual Analyzer IRIS VA400" manufactured by Alpha M.O.S. Japan K.K., and ellipse approximation is performed.

In the present disclosure, having a content of fibers satisfying a specific condition of "X% or more (or less) on a number basis" means that in a specific fiber group including a plurality of individualized fibers, X or more (or less) fibers satisfying the specific condition are included in 100 fibers.

Incidentally, regarding the number average length, the number average width, and the content on a number basis, for convenience of calculation on a number basis, unavoidably obtained fiber fragments are not used for calculation in order to stabilize the measurement result. Specifically, the calculation is performed so that those having a length of 2 mm or less are not included in the 100 fibers to be extracted.

In the present disclosure, when a certain numerical range is indicated as "A to B", the numerical range is A or more and B or less. That is, A and B are included in the numerical range.

### [Texturized fibrous vegetable protein]

The texturized fibrous vegetable protein of the present disclosure contains a protein derived from pea. Typically, when the texturized fibrous vegetable protein contains a protein derived from pea, the desired aspect ratio is easily obtained in the defibrated fiber. Also, typically, when the texturized fibrous vegetable protein contains a protein derived from pea, generation of an undesirable odor derived from hexanal, 2-pentylfuran, or the like is easily suppressed.

There are varieties of peas such as green, yellow and brown, but any of these may be used. Typically, when yellow peas are used, the desired aspect ratio is easily obtained. The protein derived from pea may be any of pea flour, concentrated pea protein, and isolated pea protein. Typically, when isolated pea protein is used, the desired aspect ratio is easily obtained.

The texturized fibrous vegetable protein may be free or substantially free of proteins derived from soybean. Typically, when the texturized fibrous vegetable protein does not contain a protein derived from soybean, the desired aspect ratio is easily obtained. Also, typically, when the texturized fibrous vegetable protein does not contain a protein derived from soybean, generation of an undesirable odor derived from hexanal, 2-pentylfuran, or the like is easily suppressed. Here, the phrase "substantially free of proteins derived from soybean" means that the content of the protein derived from soybean among the vegetable proteins contained in the texturized fibrous vegetable protein is 10 mass% or less. Among the vegetable proteins contained in the texturized fibrous vegetable protein, the content of the protein derived from soybean may be 5 mass% or less, 3 mass% or less, or 1 mass% or less.

The texturized fibrous vegetable protein of the present disclosure contains a salt of a monovalent cation. The salt of a monovalent cation is a salt composed of a monovalent cation and an anion having an arbitrary valence. The salt of a monovalent cation may be, for example, an ammonium salt or an alkali metal salt. The alkali metal salt may be, for example, a sodium salt or a potassium salt.

In the salt of a monovalent cation, the anion may be an inorganic anion or an organic anion. The anion may be a monovalent anion, a divalent anion, a trivalent anion, or an anion having a valence of 4 or more.

Non-limiting examples of inorganic anions include chloride ion (Cl⁻), hydroxide ion (OH⁻), phosphate ion (PO₄³⁻), hydrogen phosphate ion (HPO₄²⁻), dihydrogen phosphate ion (H₂PO₄⁻), nitrate ion (NO₃⁻), nitrite ion (NO₂⁻), sulfate ion (SO₄²⁻), sulfite ion (SO₃²⁻), carbonate ion (CO₃²⁻), and hydrogen carbonate ion (HCO₃⁻).

Non-limiting examples of organic anions include glutamate ion, aspartate ion, inosinate ion, uridylate ion, citrate ion, malate ion, acetate ion, gluconate ion, succinate ion, fumarate ion, maleate ion, and ascorbate ion.

The salt of a monovalent cation may be, for example, at least one sodium salt selected from the group consisting of sodium chloride, monosodium glutamate, and sodium carbonate. The salt of a monovalent cation may be potassium chloride.

The texturized fibrous vegetable protein of the present disclosure contains a salt of a monovalent cation in an amount of 0.1 mass% or more and less than 2 mass% with respect to the protein derived from pea. Here, "contains a salt of a monovalent cation in an amount of Y mass% with respect to the protein derived from pea" means that a salt of a monovalent cation is contained in an amount of Y parts by mass based on 100 parts by mass of the protein derived from pea. For example, the content of the salt of a monovalent cation with respect to the protein derived from pea may be 0.2 mass% or more, 0.3 mass% or more, or 0.4 mass% or more. Typically, within the above range, the higher the content of the salt of a monovalent cation with respect to the protein derived from pea, the more likely the quality of the texturized fibrous vegetable protein is to be stabilized.

Also, for example, the content of the salt of a monovalent cation with respect to the protein derived from pea may be 1.5 mass% or less, 1.2 mass% or less, or 0.8 mass% or less. Typically, within the above range, the lower the content of the salt of a monovalent cation with respect to the protein derived from pea, the less the influence on the taste.

The upper limit value and the lower limit value of the content of the salt of a monovalent cation with respect to the protein derived from pea can be arbitrarily combined within the scope of the present disclosure. For example, the content of the salt of a monovalent cation with respect to the protein derived from pea may be in the range of 0.2 mass% to 1.5 mass%, in the range of 0.3 mass% to 1.2 mass%, or in the range of 0.4 mass% to 0.8 mass%. When the content of the salt of a monovalent cation with respect to the protein derived from pea is within an appropriate range, a desired aspect ratio is easily obtained in the defibrated fiber.

In the texturized fibrous vegetable protein of the present disclosure, the content of the salt of a divalent cation with respect to the protein derived from pea may be 1.0 mass% or less, 0.8 mass% or less, 0.6 mass% or less, 0.4 mass% or less, 0.2 mass% or less, 0.1 mass% or less, or 0.01 mass% or less. Here, the salt of a divalent cation is a salt composed of a divalent cation and an anion having an arbitrary valence. Non-limiting examples of divalent cations include calcium ions and magnesium ions. Typically, the lower the content of the salt of a divalent cation with respect to the protein derived from pea, the easier it is to obtain the desired aspect ratio.

The water content of the texturized fibrous vegetable protein of the present disclosure is not particularly limited. For example, the water content of the texturized fibrous vegetable protein may be 10 mass% or less, 8 mass% or less, or 6 mass% or less. Typically, the lower the water content of the texturized fibrous vegetable protein, the more likely it is to increase the storage stability.

The texturized fibrous vegetable protein of the present disclosure may contain other components. For example, the texturized fibrous vegetable protein of the present disclosure may further contain at least one selected from the group consisting of other vegetable proteins, animal proteins, dietary fibers, cereal flour, fruit juice, vegetables, starches, fats and oils, seasoning, spices, dyes, flavors, and enzymes.

The texturized fibrous vegetable protein of the present disclosure may be used as a cooking material for substituting various foods regardless of animal or plant origin. The texturized fibrous vegetable protein of the present disclosure may be used as a cooking material for substituting at least one livestock meat selected from the group consisting of beef, pork, horsemeat, mutton, goat and chicken, for example. Also, the texturized fibrous vegetable protein of the present disclosure may be used as a cooking material for substituting fish meat, for example. In addition, the texturized fibrous vegetable protein of the present disclosure may be used as a cooking material for substituting vegetables such as carrot, burdock root, green onion, and Japanese radish.

The texturized fibrous vegetable protein of the present disclosure can be produced, for example, by treating a protein derived from pea with a salt of a monovalent cation using an extruder or the like and organizing the protein into a fibrous form. If desired, the extrudate may be dried to the desired water content.

### [Defibrated product of texturized fibrous vegetable protein]

The defibrated product of the texturized fibrous vegetable protein of the present disclosure contains a protein derived from pea. Typically, when the defibrated product of the texturized fibrous vegetable protein contains a protein derived from pea, the desired aspect ratio is easily obtained. Also, typically, when the defibrated product of the texturized fibrous vegetable protein contains a protein derived from pea, generation of an undesirable odor derived from hexanal, 2-pentylfuran, or the like is easily suppressed.

There are varieties of peas such as green, yellow and brown, but any of these may be used. Typically, when yellow peas are used, the desired aspect ratio is easily obtained. The protein derived from pea may be any of pea flour, concentrated pea protein, and isolated pea protein. Typically, when isolated pea protein is used, the desired aspect ratio is easily obtained.

The defibrated product of the texturized fibrous vegetable protein may be free or substantially free of proteins derived from soybean. Typically, when the defibrated product of the texturized fibrous vegetable protein does not contain a protein derived from soybean, the desired aspect ratio is easily obtained. Also, typically, when the defibrated product of the texturized fibrous vegetable protein does not contain a protein derived from soybean, generation of an undesirable odor derived from hexanal, 2-pentylfuran, or the like is easily suppressed. Here, the phrase "substantially free of proteins derived from soybean" means that the content of the protein derived from soybean among the vegetable proteins contained in the defibrated product of the texturized fibrous vegetable protein is 10 mass% or less. Among the vegetable proteins contained in the defibrated product of the texturized fibrous vegetable protein, the content of the protein derived from soybean may be 5 mass% or less, 3 mass% or less, or 1 mass% or less.

The defibrated product of the texturized fibrous vegetable protein of the present disclosure contains a salt of a monovalent cation. For the type and content of the salt of a monovalent cation, the contents described in the section of the texturized fibrous vegetable protein of the present disclosure can be applied as they are.

In the defibrated product of the texturized fibrous vegetable protein of the present disclosure, the content of the salt of a divalent cation with respect to the protein derived from pea may be 1.0 mass% or less, 0.8 mass% or less, 0.6 mass% or less, 0.4 mass% or less, 0.2 mass% or less, 0.1 mass% or less, or 0.01 mass% or less. Here, the salt of a divalent cation is a salt composed of a divalent cation and an anion having an arbitrary valence. Non-limiting examples of divalent cations include calcium ions and magnesium ions. Typically, the lower the content of the salt of a divalent cation with respect to the protein derived from pea, the easier it is to obtain the desired aspect ratio.

The water content of the defibrated product of the texturized fibrous vegetable protein of the present disclosure is not particularly limited. For example, the water content of the defibrated product of the texturized fibrous vegetable protein may be in the range of 40 mass% to 80 mass%, or may be in the range of 50 mass% to 70 mass%. When the water content of the defibrated product of the texturized fibrous vegetable protein is within an appropriate range, excellent texture is easily imparted to food.

The defibrated product of the texturized fibrous vegetable protein of the present disclosure may contain other components. For example, the defibrated product of the texturized fibrous vegetable protein of the present disclosure may further contain at least one selected from the group consisting of other vegetable proteins, animal proteins, dietary fibers, cereal flour, fruit juice, vegetables, starches, fats and oils, seasoning, spices, dyes, flavors, and enzymes.

The defibrated product of the texturized fibrous vegetable protein of the present disclosure may be used as a cooking material for substituting various fibrous foods regardless of animal or plant origin. The defibrated product of the texturized fibrous vegetable protein of the present disclosure may be used as a cooking material for substituting at least one livestock meat selected from the group consisting of beef, pork, horsemeat, mutton, goat and chicken, for example. Also, the defibrated product of the texturized fibrous vegetable protein of the present disclosure may be used as a cooking material for substituting fish meat, for example. In addition, the defibrated product of the texturized fibrous vegetable protein of the present disclosure may be used as a cooking material for substituting vegetables such as carrot, burdock root, green onion, and Japanese radish.

In the defibrated product of the texturized fibrous vegetable protein of the present disclosure, the number average length of the contained fibers is not particularly limited. For example, the fibers contained in the defibrated product of the texturized fibrous vegetable protein may have a number average length of 18 mm or more, 19 mm or more, 20 mm or more, or 20.6 mm or more. Typically, the longer the number average length of the fibers contained in the defibrated product of the texturized fibrous vegetable protein, the easier it is to impart excellent texture to food.

The upper limit value of the number average length of the fibers contained in the defibrated product of the texturized fibrous vegetable protein is not particularly limited. For example, the fibers contained in the defibrated product of the texturized fibrous vegetable protein may have a number average length of 100 mm or less, 50 mm or less, 30 mm or less, or 25 mm or less. Typically, the shorter the number average length of the fibers contained in the defibrated product of the texturized fibrous vegetable protein, the higher the production efficiency.

The upper limit value and the lower limit value of the number average length of the fibers contained in the defibrated product of the texturized fibrous vegetable protein can be arbitrarily combined within the scope of the present disclosure. For example, the fibers contained in the defibrated product of the texturized fibrous vegetable protein may have a number average length in the range of 18 mm to 100 mm, in the range of 19 mm to 50 mm, in the range of 20 mm to 30 mm, or in the range of 20.6 mm to 25 mm. When the number average length of the fibers contained in the defibrated product of the texturized fibrous vegetable protein is within an appropriate range, it is possible to efficiently produce a defibrated product capable of imparting excellent texture to food.

In the defibrated product of the texturized fibrous vegetable protein of the present disclosure, the content of fibers having an aspect ratio of less than 7.5 is not particularly limited. For example, the content of fibers having an aspect ratio of less than 7.5 in the defibrated product of the texturized fibrous vegetable protein may be 70% or less, 68% or less, 66% or less, 64% or less, 60% or less, or 55% or less on a number basis. Typically, the lower the content of fibers having an aspect ratio of less than 7.5 in the defibrated product of the texturized fibrous vegetable protein, the easier it is to impart excellent texture to food.

The content of fibers having an aspect ratio of less than 7.5 in the defibrated product of the texturized fibrous vegetable protein may be 0% or more, 5% or more, 10% or more, 15% or more, 20% or more, or 25% or more on a number basis. Typically, the higher the content of fibers having an aspect ratio of less than 7.5 in the defibrated product of the texturized fibrous vegetable protein, the higher the production efficiency.

The upper limit value and the lower limit value of the content of fibers having an aspect ratio of less than 7.5 in the defibrated product of the texturized fibrous vegetable protein can be arbitrarily combined within the scope of the present disclosure. For example, the content of fibers having an aspect ratio of less than 7.5 in the defibrated product of the texturized fibrous vegetable protein may be in the range of 0% to 70%, in the range of 5% to 68%, in the range of 10% to 66%, in the range of 15% to 64%, in the range of 20% to 60%, or in the range of 25% to 55% on a number basis. When the content of fibers having an aspect ratio of less than 5 in the defibrated product of the texturized fibrous vegetable protein is within an appropriate range, it is possible to efficiently produce a defibrated product capable of imparting excellent texture to food.

In the defibrated product of the texturized fibrous vegetable protein of the present disclosure, the content of fibers having an aspect ratio of 10 or more is not particularly limited. For example, the content of fibers having an aspect ratio of 10 or more in the defibrated product of the texturized fibrous vegetable protein may be 10% or more, 11% or more, 12% or more, 13% or more, 14% or more, or 15% or more on a number basis. Typically, the higher the content of fibers having an aspect ratio of 10 or more in the defibrated product of the texturized fibrous vegetable protein, the easier it is to impart excellent texture to food.

The content of fibers having an aspect ratio of 10 or more in the defibrated product of the texturized fibrous vegetable protein may be 100% or less, 60% or less, 50% or less, 40% or less, 30% or less, or 20% or less on a number basis. Typically, the lower the content of fibers having an aspect ratio of 10 or more in the defibrated product of the texturized fibrous vegetable protein, the higher the production efficiency.

The upper limit value and the lower limit value of the content of fibers having an aspect ratio of 10 or more in the defibrated product of the texturized fibrous vegetable protein can be arbitrarily combined within the scope of the present disclosure. For example, the content of fibers having an aspect ratio of 10 or more in the defibrated product of the texturized fibrous vegetable protein may be in the range of 10% to 100%, in the range of 11% to 60%, in the range of 12% to 50%, in the range of 13% to 40%, in the range of 14% to 30%, or in the range of 15% to 20% on a number basis. When the content of fibers having an aspect ratio of 10 or more in the defibrated product of the texturized fibrous vegetable protein is within an appropriate range, it is possible to efficiently produce a defibrated product capable of imparting excellent texture to food.

In the defibrated product of the texturized fibrous vegetable protein of the present disclosure, the content of fibers having an aspect ratio of 7.5 or more and less than 10 is not particularly limited. For example, the content of fibers having an aspect ratio of 7.5 or more and less than 10 in the defibrated product of the texturized fibrous vegetable protein may be 20% or more, 22% or more, 24% or more, or 25% or more on a number basis. For example, the content of fibers having an aspect ratio of 5 or more and less than 10 in the defibrated product of the texturized fibrous vegetable protein may be, for example, 90% or less, 80% or less, 70% or less, or 60% or less on a number basis.

The upper limit value and the lower limit value of the content of fibers having an aspect ratio of 7.5 or more and less than 10 in the defibrated product of the texturized fibrous vegetable protein can be arbitrarily combined within the scope of the present disclosure. For example, the content of fibers having an aspect ratio of 7.5 or more and less than 10 in the defibrated product of the texturized fibrous vegetable protein may be in the range of 20% to 90%, in the range of 22% to 80%, in the range of 24% to 70%, or in the range of 25% to 60% on a number basis.

In the defibrated product of the texturized fibrous vegetable protein of the present disclosure, the content of fibers having a length of less than 10 mm is not particularly limited. For example, the content of fibers having a length of less than 10 mm in the defibrated product of the texturized fibrous vegetable protein may be 20% or less, 15% or less, 10% or less, or 5% or less on a number basis. Typically, the lower the content of fibers having a length of less than 10 mm in the defibrated product of the texturized fibrous vegetable protein, the easier it is to impart excellent texture to food.

The content of fibers having a length of less than 10 mm in the defibrated product of the texturized fibrous vegetable protein may be 0% or more than 0% on a number basis. That is, for example, the content of fibers having a length of less than 10 mm in the defibrated product of the texturized fibrous vegetable protein may be in the range of 0% to 20%, in the range of 0% to 15%, in the range of 0% to 10%, or in the range of 0% to 5% on a number basis.

In the defibrated product of the texturized fibrous vegetable protein of the present disclosure, the content of fibers having a length of 30 mm or more is not particularly limited. For example, the content of fibers having a length of 30 mm or more in the defibrated product of the texturized fibrous vegetable protein may be 2% or more, 3% or more, 5% or more, 7% or more, or 10% or more on a number basis. Typically, the higher the content of fibers having a length of 30 mm or more in the defibrated product of the texturized fibrous vegetable protein, the easier it is to impart excellent texture to food.

The content of fibers having a length of 30 mm or more in the defibrated product of the texturized fibrous vegetable protein may be 100% or less, 50% or less, 40% or less, 30% or less, or 20% or less on a number basis. Typically, the lower the content of fibers having a length of 30 mm or more in the defibrated product of the texturized fibrous vegetable protein, the higher the production efficiency.

The upper limit value and the lower limit value of the content of fibers having a length of 30 mm or more in the defibrated product of the texturized fibrous vegetable protein can be arbitrarily combined within the scope of the present disclosure. For example, the content of fibers having a length of 30 mm or more in the defibrated product of the texturized fibrous vegetable protein may be in the range of 2% to 100%, in the range of 3% to 50%, in the range of 5% to 40%, in the range of 7% to 30%, or in the range of 10% to 20% on a number basis. When the content of fibers having a length of 30 mm or more in the defibrated product of the texturized fibrous vegetable protein is within an appropriate range, it is possible to efficiently produce a defibrated product capable of imparting excellent texture to food.

In the defibrated product of the texturized fibrous vegetable protein of the present disclosure, the content of fibers having a length of 10 mm or more and less than 30 mm is not particularly limited. For example, the content of fibers having a length of 10 mm or more and less than 30 mm in the defibrated product of the texturized fibrous vegetable protein may be 50% or more, 60% or more, 70% or more, or 80% or more on a number basis. For example, the content of fibers having a length of 10 mm or more and less than 30 mm in the defibrated product of the texturized fibrous vegetable protein may be 98% or less, 95% or less, 92% or less, or 90% or less on a number basis.

The upper limit value and the lower limit value of the content of fibers having a length of 10 mm or more and less than 30 mm in the defibrated product of the texturized fibrous vegetable protein can be arbitrarily combined within the scope of the present disclosure. For example, the content of fibers having a length of 10 mm or more and less than 30 mm in the defibrated product of the texturized fibrous vegetable protein may be in the range of 50% to 98%, in the range of 60% to 95%, in the range of 70% to 92%, or in the range of 80% to 90% on a number basis.

The number average width of the fibers contained in the defibrated product of the texturized fibrous vegetable protein of the present disclosure is not particularly limited. For example, the fibers contained in the defibrated product of the texturized fibrous vegetable protein may have a number average width of 1 mm or more, 2 mm or more, or 3 mm or more. Typically, the larger the number average width of the fibers contained in the defibrated product of the texturized fibrous vegetable protein, the easier it is to impart excellent texture to food.

For example, the fibers contained in the defibrated product of the texturized fibrous vegetable protein may have a number average width of 10 mm or less, 8 mm or less, or 5 mm or less. Typically, the smaller the number average width of the fibers contained in the defibrated product of the texturized fibrous vegetable protein, the higher the production efficiency.

The upper limit value and the lower limit value of the number average width of the fibers contained in the defibrated product of the texturized fibrous vegetable protein can be arbitrarily combined within the scope of the present disclosure. For example, the fibers contained in the defibrated product of the texturized fibrous vegetable protein may have a number average width in the range of 1 mm to 10 mm, in the range of 2 mm to 8 mm, or in the range of 3 mm to 5 mm. When the number average width of the fibers contained in the defibrated product of the texturized fibrous vegetable protein is within an appropriate range, it is possible to efficiently produce a defibrated product capable of imparting excellent texture to food.

The defibrated product of the texturized fibrous vegetable protein of the present disclosure can be produced, for example, by a method including a step of rehydrating the texturized fibrous vegetable protein of the present disclosure as necessary, and then processing the rehydrated texturized fibrous vegetable protein in a gap between a first surface and a second surface facing the first surface and moving relative to the first surface.

In the step of processing the texturized fibrous vegetable protein in a gap between a first surface and a second surface facing the first surface and moving relative to the first surface, typically, the first surface and the second surface are surfaces included in one or more members included in a device used in the step. Typically, neither the first surface nor the second surface has a blade. In the step, three or more surfaces may be involved.

Aspects in which the second surface is moved relative to the first surface include any of (i) an aspect in which the first surface is moving and the second surface is stationary, (ii) an aspect in which the first surface and the second surface are both moving, but the speed and/or direction of movement of the first surface and the speed and/or direction of movement of the second surface are different from each other, and (iii) an aspect in which the second surface is moving and the first surface is stationary. Typically, in the relative motion, a component of a relative speed along a direction in which a distance from the first surface to the second surface is shortest is smaller than a component of a relative speed along a plane orthogonal to the direction.

The gap between the first surface and the second surface, that is, the shortest distance from the first surface to the second surface is not particularly limited. For example, the gap between the first surface and the second surface may be 0.5 mm or more, 0.8 mm or more, 1 mm or more, or 1.2 mm or more. Typically, the larger the gap between the first surface and the second surface, the more easily the breakage of the fiber during fibrillation is suppressed.

For example, the gap between the first surface and the second surface may be 3 mm or less, 2.8 mm or less, 2.6 mm or less, or 2 mm or less. Typically, the smaller the gap between the first surface and the second surface, the more efficiently fibrillation can be achieved.

The upper limit value and the lower limit value of the gap between the first surface and the second surface can be arbitrarily combined within the scope of the present disclosure. For example, the gap between the first surface and the second surface may be in the range of 0.5 mm to 3 mm, in the range of 0.8 mm to 2.8 mm, in the range of 1 mm to 2.6 mm, or in the range of 1.2 mm to 2 mm.

In the present method, a grinding device may be used. The grinding device described herein is a device that grinds an object to be processed between a member having the first surface and a member having the second surface facing the first surface.

Non-limiting examples of such grinding devices include a stone mill, a rotary stone mill, an earthenware mortar, a mortar, and a grinding kneader. The grinding device may be manual or powered. The "stone mill" and the "rotary stone mill" herein are not necessarily made of stone, and refer to a general device generally called a "stone mill type". That is, the "stone mill" and the "rotary stone mill" may be made of metal, ceramic, wood, or resin. Examples of the rotary stone mill include "Supermasscolloider MKZA10-15J" manufactured by MASUKO SANGYO CO.,LTD.

When a stone mill or rotary stone mill is used, for example, the member having the first surface is a lower stone, and the member having the second surface is an upper stone. However, the opposite may be applied. When an earthenware mortar is used, for example, the member having the first surface is a bowl, and the member having the second surface is a wooden pestle. However, the opposite may be applied. When a mortar or grinding kneader is used, for example, the member having the first surface is a bowl, and the member having the second surface is a pestle. However, the opposite may be applied.

### [Method for improving defibration resistance of texturized fibrous vegetable protein]

The present disclosure also includes a method for improving defibration resistance of a texturized fibrous vegetable protein. The method for improving defibration resistance of a texturized fibrous vegetable protein of the present disclosure includes a step of adding a salt of a monovalent cation in an amount of 0.1 mass% or more and less than 2 mass% with respect to the vegetable protein. Typically, the addition of monovalent cations is carried out in an apparatus (for example, an extruder or the like) in the production of texturized fibrous vegetable protein. According to the method for improving defibration resistance of a texturized fibrous vegetable protein of the present disclosure, fibers are less likely to be broken during defibration, and fibers having a desired aspect ratio and/or length are likely to be obtained. As for the type of the salt of a monovalent cation, the content described in the section of the texturized fibrous vegetable protein of the present disclosure can be applied as it is.

In the method for improving defibration resistance of a texturized fibrous vegetable protein, the addition amount of the salt of a monovalent cation may be, for example, 0.2 mass% or more, 0.3 mass% or more, or 0.4 mass% or more with respect to the vegetable protein. Typically, within the above range, the higher the addition amount of the salt of a monovalent cation to the vegetable protein, the more likely the quality of the texturized fibrous vegetable protein is to be stabilized. In addition, for example, the addition amount of the salt of a monovalent cation to the vegetable protein may be 1.5 mass% or less, 1.2 mass% or less, or 0.8 mass% or less. Typically, within the above range, the smaller the addition amount of the salt of a monovalent cation to the vegetable protein, the less the influence on the taste.

The upper limit value and the lower limit value of the addition amount of the salt of a monovalent cation to the vegetable protein can be arbitrarily combined within the scope of the present disclosure. For example, the addition amount of the salt of a monovalent cation to the vegetable protein may be in the range of 0.2 mass% to 1.5 mass%, in the range of 0.3 mass% to 1.2 mass%, or in the range of 0.4 mass% to 0.8 mass%. When the addition amount of the salt of a monovalent cation to the vegetable protein is within an appropriate range, a desired aspect ratio is easily obtained in the defibrated fiber.

In the method for improving defibration resistance of a texturized fibrous vegetable protein of the present disclosure, a salt of a divalent cation may not be added at all or may not be substantially added. Here, a divalent cation "is not substantially added" means that divalent cations are not actively added, except for divalent cations that are inevitably mixed, such as those contained in raw materials. The addition amount of the salt of a divalent cation to the vegetable protein may be 1.0 mass% or less, 0.8 mass% or less, 0.6 mass% or less, 0.4 mass% or less, 0.2 mass% or less, 0.1 mass% or less, 0.01 mass% or less, or 0 mass%. Here, the salt of a divalent cation is a salt composed of a divalent cation and an anion having an arbitrary valence. Non-limiting examples of divalent cations include calcium ions and magnesium ions. Typically, the lower the content of the salt of a divalent cation with respect to the vegetable protein, the easier it is to obtain the desired aspect ratio.

The vegetable protein may contain, for example, a protein derived from grains or legumes. As the grain, for example, a fruit (seed) of a gramineous plant can be used. As the legume, for example, a fruit (seed) of a leguminous plant can be used. Examples of the gramineous plant include wheat, barley, oat, rye, adlay, rice, and corn. Examples of the leguminous plant include soybean, broad bean, pea, kidney bean, chickpea, winged bean, lentil, peanut, red bean, and mung bean.

In particular, the vegetable protein may contain a protein derived from pea. Typically, when the vegetable protein contains a protein derived from pea, the desired aspect ratio is easily obtained. Also, typically, when the vegetable protein contains a protein derived from pea, generation of an undesirable odor derived from hexanal, 2-pentylfuran, or the like is easily suppressed.

There are varieties of peas such as green, yellow and brown, but any of these may be used. Typically, when yellow peas are used, the desired aspect ratio is easily obtained. The protein derived from pea may be any of pea flour, concentrated pea protein, and isolated pea protein. Typically, when isolated pea protein is used, the desired aspect ratio is easily obtained.

The vegetable protein may be free of or substantially free of proteins derived from soybean. Typically, when the vegetable protein does not contain a protein derived from soybean, the desired aspect ratio is easily obtained. Also, typically, when the vegetable protein does not contain a protein derived from soybean, generation of an undesirable odor derived from hexanal, 2-pentylfuran, or the like is easily suppressed. Here, the phrase "substantially free of proteins derived from soybean" means that the content of the protein derived from soybean among the vegetable proteins is 10 mass% or less. Among the vegetable proteins, the content of the protein derived from soybean may be 5 mass% or less, 3 mass% or less, or 1 mass% or less.

In this specification, each specific matter described in an embodiment regarding each aspect of the present disclosure may be arbitrarily combined into a new embodiment, and such a new embodiment should also be understood as being included in each aspect of the present disclosure.

### [Examples]

Hereinafter, the present disclosure will be described more specifically with reference to examples and the like, but the present disclosure is not limited at all by these examples and the like.

### [Preparation of texturized fibrous vegetable protein]

A texturized fibrous vegetable protein derived from pea was prepared using the raw materials shown in Table 1 under the conditions shown in Table 2.

**[Table 1]**

| Raw material of texturized fibrous vegetable protein derived from pea | | Blending amount (parts by mass) |
|---|---|---|
| Pea protein | NUTRALYS S85F (manufactured by Roquette) | 85 |
| Dietary fiber | PEA FIBER I 50M (manufactured by Roquette) | 15 |
| Others | | Amount described in description |

**[Table 2]**

| Extruder | EA-20 manufactured by SUEHIRO EPM Corporation |
|---|---|
| Feed amount (kg/h) | 20 |
| Water addition amount (L/h) | 5.4 |
| Die plate temperature (°C) | 160 |
| Tip barrel temperature (°C) | 200 |
| Middle barrel 2 temperature (°C) | 140 |
| Middle barrel 1 temperature (°C) | 100 |
| Screw rotation speed (rpm) | 200 |
| Die shape (mm) | φ2 |
| Number of dies | 1 |

### [Evaluation of influence by addition amount of sodium chloride]

For a texturized fibrous vegetable protein derived from pea prepared by adopting sodium chloride as the salt of a monovalent cation and setting the amount thereof added to the protein derived from pea to zero (Comparative Example 1), 0.5 mass% (Example 1), 1 mass% (Example 2), or 2 mass% (Comparative Example 2), the aspect ratio and length of the defibrated fibers were evaluated as follows.

Water was added twice (mass basis) the amount of the texturized fibrous vegetable protein derived from pea, and the mixture was allowed to stand for 30 minutes to be rehydrated. Thereafter, the texturized fibrous vegetable protein was defibrated using "Supermasscolloider MKZA10-15J" manufactured by MASUKO SANGYO CO.,LTD. As conditions at that time, the size of the gap (clearance) between the treated surfaces was set to 1.5 mm, and the rotation speed was set to 2,000 rpm. The defibrated texturized fibrous vegetable protein derived from pea was put into a bowl containing water, individualized to each fiber, and then 100 fibers were randomly extracted. The extracted fibers were arranged on a plane, and photographed from directly above and image processed using "Visual Analyzer IRIS VA400" manufactured by Alpha M.O.S. Japan K.K., and ellipse approximation was performed. For each obtained fiber, the dimension of the major axis as length, the dimension of the minor axis as width, and a value obtained by dividing the length by the width as an aspect ratio were evaluated. The number average width of the fibers was in the range of 3 mm to 5 mm.

The aspect ratios are divided into three categories of less than 7.5, 7.5 or more and less than 10, and 10 or more, and the number of fibers corresponding to each category is shown in Table 3. The lengths are divided into three categories of less than 10 mm, 10 mm or more and less than 30 mm, and 30 mm or more, and the number and number average length of fibers corresponding to each category are shown in Table 4.

**[Table 3]**

| Aspect ratio | No addition | Sodium chloride | | |
|---|---|---|---|---|
| | Comparative Example 1 | Example 1 | Example 2 | Comparative Example 2 |
| | - | 0.5 mass% | 1 mass% | 2 mass% |
| <7.5 | 67 | 54 | 65 | 77 |
| 7.5 or more and less than 10 | 27 | 30 | 22 | 16 |
| 10≤ | 6 | 16 | 13 | 7 |
| Average | 6.88 | 7.30 | 6.92 | 6.31 |

**[Table 4]**

| Length | No addition | Sodium chloride | | |
|---|---|---|---|---|
| | Comparative Example 1 | Example 1 | Example 2 | Comparative Example 2 |
| | - | 0.5 mass% | 1 mass% | 2 mass% |
| <10 | 0 | 0 | 1 | 7 |
| 10 or more and less than 30 | 99 | 88 | 95 | 93 |
| 30 ≤ | 1 | 12 | 4 | 0 |
| Average | 20.56 | 20.90 | 20.62 | 17.59 |

From the above results, it was shown that in Examples 1 and 2, the ratio of fibers having a small aspect ratio was decreased, and the ratios of fibers having a large aspect ratio and long fibers were significantly increased, as compared with Comparative Examples 1 and 2.

### [Evaluation when salt of different monovalent cation is used]

For a texturized fibrous vegetable protein derived from pea prepared by adopting monosodium glutamate as the salt of a monovalent cation and setting the amount thereof added to the protein derived from pea to 0.5 mass% (Example 3), 1 mass% (Example 4), and 2 mass% (Comparative Example 3), the aspect ratio of the defibrated fiber was evaluated in the same manner as in Example 1 and the like.

In addition, for a texturized fibrous vegetable protein derived from pea prepared by adopting potassium chloride as the salt of a monovalent cation and setting the amount thereof added to the protein derived from pea to 0.5 mass% (Example 5), 1 mass% (Example 6), and 2 mass% (Comparative Example 4), the aspect ratio of the defibrated fiber was evaluated in the same manner as in Example 1 and the like.

The above results are collectively shown in Table 5.

**[Table 5]**

| Aspect ratio | Monosodium glutamate | | | Potassium chloride | | |
|---|---|---|---|---|---|---|
| | Example 3 | Example 4 | Comparative Example 3 | Example 5 | Example 6 | Comparative Example 4 |
| | 0.5 mass% | 1 mass% | 2 mass% | 0.5 mass% | 1 mass% | 2 mass% |
| <7.5 | 64 | 67 | 78 | 59 | 65 | 66 |
| 7.5 or more and less than 10 | 23 | 24 | 18 | 29 | 26 | 29 |
| 10≤ | 13 | 9 | 4 | 12 | 9 | 5 |
| Average | 7.10 | 6.89 | 6.26 | 7.08 | 7.01 | 6.86 |

From the above results, it was shown that even when monosodium glutamate or potassium chloride was used as the salt of a monovalent cation, the same effect as when sodium chloride was used was exhibited. In particular, since a similar result was shown in the potassium salt, it can be seen that the content of the present disclosure can be utilized even when it is desired to reduce the amount of sodium ions in the food.

### [Evaluation of influence by pH]

For a texturized fibrous vegetable protein derived from pea prepared by adopting malic acid instead of the salt of a monovalent cation and setting the amount thereof added to the protein derived from pea to 1 mass% (Comparative Example 5), 0.5 mass% (Comparative Example 6), and 0.2 mass% (Comparative Example 7), the aspect ratio of the defibrated fiber was evaluated in the same manner as in Example 1 and the like.

In addition, for a texturized fibrous vegetable protein derived from pea prepared by adopting sodium carbonate as the salt of a monovalent cation and setting the amount thereof added to the protein derived from pea to 0.2 mass% (Example 7) and 0.5 mass% (Example 8), the aspect ratio of the defibrated fiber was evaluated in the same manner as in Example 1 and the like.

Furthermore, for a texturized fibrous vegetable protein derived from pea prepared by adopting calcium hydroxide, which is a salt of a divalent cation, instead of the salt of a monovalent cation, and setting the amount thereof added to the protein derived from pea to 0.4 mass% (Comparative Example 8), the aspect ratio of the defibrated fiber was evaluated in the same manner as in Example 1 and the like.

The above results are collectively shown in Table 6.

**[Table 6]**

| Aspect ratio | Malic acid | | | Sodium carbonate | | Calcium hydroxide |
|---|---|---|---|---|---|---|
| | Comparative Example 5 | Comparative Example 6 | Comparative Example 7 | Example 7 | Example 8 | Comparative Example 8 |
| | 1 mass% | 0.5 mass% | 0.2 mass% | 0.2 mass% | 0.5 mass% | 0.4 mass% |
| | pH 6.3 | pH 6.7 | pH 6.9 | pH 7.1 | pH 7.5 | pH 7.6 |
| <7.5 | 96 | 62 | 56 | 44 | 25 | 100 |
| 7.5 or more and less than 10 | 4 | 32 | 38 | 43 | 59 | 0 |
| 10≤ | 0 | 6 | 6 | 13 | 16 | 0 |
| Average | 3.34 | 6.73 | 6.86 | 7.25 | 7.51 | 3.45 |

From the above results, it was shown that even when a basic salt was used, the same effect as when sodium chloride was used is exhibited as long as it is a salt of a monovalent cation, and the effect of improving defibration resistance was not influence at least only by pH.

### [Evaluation when salt of divalent cation is used]

For a texturized fibrous vegetable protein derived from pea prepared by adopting calcium sulfate, which is a salt of a divalent cation, instead of the salt of a monovalent cation, and setting the amount thereof added to the protein derived from pea to 0.5 mass% (Comparative Example 9), 1 mass% (Comparative Example 10), and 2 mass% (Comparative Example 11), the aspect ratio of the defibrated fiber was evaluated in the same manner as in Example 1 and the like.

In addition, for a texturized fibrous vegetable protein derived from pea prepared by adopting calcium chloride, which is a salt of a divalent cation, instead of the salt of a monovalent cation, and setting the amount thereof added to the protein derived from pea to 0.5 mass% (Comparative Example 12), 1 mass% (Comparative Example 13), and 2 mass% (Comparative Example 14), the aspect ratio of the defibrated fiber was evaluated in the same manner as in Example 1 and the like.

Further, for a texturized fibrous vegetable protein derived from pea prepared by adopting magnesium carbonate, which is a salt of a divalent cation, instead of the salt of a monovalent cation, and setting the amount thereof added to the protein derived from pea to 0.5 mass% (Comparative Example 15), 1 mass% (Comparative Example 16), and 2 mass% (Comparative Example 17), the aspect ratio of the defibrated fiber was evaluated in the same manner as in Example 1 and the like.

The above results are collectively shown in Table 7.

**[Table 7]**

| Aspect ratio | Calcium sulfate | | | Calcium chloride | | | Magnesium carbonate | | |
|---|---|---|---|---|---|---|---|---|---|
| | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 |
| | 0.5 mass% | 1 mass% | 2 mass% | 0.5 mass% | 1 mass% | 2 mass% | 0.5 mass% | 1 mass% | 2 mass% |
| <7.5 | 77 | 80 | 91 | 96 | 98 | 97 | 91 | 92 | 92 |
| 7.5 or more and less than 10 | 19 | 18 | 9 | 4 | 2 | 3 | 9 | 8 | 8 |
| 10≤ | 4 | 2 | 0 | 0 | 0 | 0 | 0 | 0 | 0 |
| Average | 5.92 | 5.69 | 3.83 | 3.28 | 3.31 | 2.57 | 4.01 | 3.64 | 3.72 |

From the above results, it was shown that when a salt of a divalent cation was used, the aspect ratio rather tended to decrease.

Exemplary embodiments of the present disclosure are shown below.
[1] A texturized fibrous vegetable protein containing:
   a protein derived from pea; and
   a salt of a monovalent cation, wherein
   the salt of a monovalent cation is contained in an amount of 0.1 mass% or more and less than 2 mass% with respect to the protein derived from pea.
[2] The texturized fibrous vegetable protein according to [1], wherein the salt of a monovalent cation is contained in an amount of 0.2 mass% or more and less than 1.5 mass% with respect to the protein derived from pea.
[3] The texturized fibrous vegetable protein according to [1] or [2], wherein the salt of a monovalent cation is contained in an amount of 0.3 mass% or more and less than 1.2 mass% with respect to the protein derived from pea.
[4] The texturized fibrous vegetable protein according to any one of [1] to [3], wherein the salt of a monovalent cation is contained in an amount of 0.4 mass% or more and less than 0.8 mass% with respect to the protein derived from pea.
[5] The texturized fibrous vegetable protein according to any one of [1] to [4], wherein the salt of a monovalent cation is an alkali metal salt.
[6] The texturized fibrous vegetable protein according to [5], wherein the alkali metal salt is a sodium salt.
[7] The texturized fibrous vegetable protein according to [6], wherein the sodium salt is at least one selected from the group consisting of sodium chloride, monosodium glutamate, and sodium carbonate.
[8] The texturized fibrous vegetable protein according to [5], wherein the alkali metal salt is a potassium salt.
[9] The texturized fibrous vegetable protein according to [8], wherein the potassium salt is potassium chloride.
[10] The texturized fibrous vegetable protein according to any one of [1] to [9], having a water content of 10 mass% or less.
[11] The texturized fibrous vegetable protein according to any one of [1] to [10], having a water content of 8 mass% or less.
[12] The texturized fibrous vegetable protein according to any one of [1] to [11], having a water content of 6 mass% or less.
[13] The texturized fibrous vegetable protein according to any one of [1] to [12], which does not contain a protein derived from soybean.
[14] A defibrated product of the texturized fibrous vegetable protein according to any one of [1] to [13].
[15] A defibrated product of a texturized fibrous vegetable protein containing:
   a protein derived from pea; and
   a salt of a monovalent cation, wherein
   the salt of a monovalent cation is contained in an amount of 0.1 mass% or more and less than 2 mass% with respect to the protein derived from pea.
[16] The defibrated product of a texturized fibrous vegetable protein according to [15], wherein the salt of a monovalent cation is contained in an amount of 0.2 mass% or more and less than 1.5 mass% with respect to the protein derived from pea.
[17] The defibrated product of a texturized fibrous vegetable protein according to [15] or [16], wherein the salt of a monovalent cation is contained in an amount of 0.3 mass% or more and less than 1.2 mass% with respect to the protein derived from pea.
[18] The defibrated product of a texturized fibrous vegetable protein according to any one of [15] to [17], wherein the salt of a monovalent cation is contained in an amount of 0.4 mass% or more and less than 0.8 mass% with respect to the protein derived from pea.
[19] The defibrated product of a texturized fibrous vegetable protein according to any one of [15] to [18], wherein the salt of a monovalent cation is an alkali metal salt.
[20] The defibrated product of a texturized fibrous vegetable protein according to [19], wherein the alkali metal salt is a sodium salt.
[21] The defibrated product of a texturized fibrous vegetable protein according to [20], wherein the sodium salt is at least one selected from the group consisting of sodium chloride, monosodium glutamate, and sodium carbonate.
[22] The defibrated product of a texturized fibrous vegetable protein according to [19], wherein the alkali metal salt is a potassium salt.
[23] The defibrated product of a texturized fibrous vegetable protein according to [22], wherein the potassium salt is potassium chloride.
[24] The defibrated product of a texturized fibrous vegetable protein according to any one of [15] to [23], which does not contain a protein derived from soybean.
[25] The defibrated product of a texturized fibrous vegetable protein according to any one of [15] to [24], wherein the contained fibers have a number average length of 18 mm or more.
[26] The defibrated product of a texturized fibrous vegetable protein according to any one of [15] to [25], wherein the contained fibers have a number average length of 18 mm or more and 100 mm or less.
[27] The defibrated product of a texturized fibrous vegetable protein according to any one of [15] to [26], wherein the contained fibers have a number average length of 19 mm or more and 50 mm or less.
[28] The defibrated product of a texturized fibrous vegetable protein according to any one of [15] to [27], wherein the contained fibers have a number average length of 20 mm or more and 30 mm or less.
[29] The defibrated product of a texturized fibrous vegetable protein according to any one of [15] to [28], wherein the contained fibers have a number average length of 20.6 mm or more and 25 mm or less.
[30] The defibrated product of a texturized fibrous vegetable protein according to any one of [15] to [29], wherein the content of fibers having an aspect ratio of less than 7.5 is 0% or more and 70% or less on a number basis.
[31] The defibrated product of a texturized fibrous vegetable protein according to any one of [15] to [30], wherein the content of fibers having an aspect ratio of less than 7.5 is 5% or more and 68% or less on a number basis.
[32] The defibrated product of a texturized fibrous vegetable protein according to any one of [15] to [31], wherein the content of fibers having an aspect ratio of less than 7.5 is 10% or more and 66% or less on a number basis.
[33] The defibrated product of a texturized fibrous vegetable protein according to any one of [15] to [32], wherein the content of fibers having an aspect ratio of less than 7.5 is 15% or more and 64% or less on a number basis.
[34] The defibrated product of a texturized fibrous vegetable protein according to any one of [15] to [33], wherein the content of fibers having an aspect ratio of less than 7.5 is 20% or more and 60% or less on a number basis.
[35] The defibrated product of a texturized fibrous vegetable protein according to any one of [15] to [34], wherein the content of fibers having an aspect ratio of less than 7.5 is 25% or more and 55% or less on a number basis.
[36] The defibrated product of a texturized fibrous vegetable protein according to any one of [15] to [35], wherein the content of fibers having an aspect ratio of 10 or more is 10% or more and 100% or less on a number basis.
[37] The defibrated product of a texturized fibrous vegetable protein according to any one of [15] to [36], wherein the content of fibers having an aspect ratio of 10 or more is 11% or more and 60% or less on a number basis.
[38] The defibrated product of a texturized fibrous vegetable protein according to any one of [15] to [37], wherein the content of fibers having an aspect ratio of 10 or more is 12% or more and 50% or less on a number basis.
[39] The defibrated product of a texturized fibrous vegetable protein according to any one of [15] to [38], wherein the content of fibers having an aspect ratio of 10 or more is 13% or more and 40% or less on a number basis.
[40] The defibrated product of a texturized fibrous vegetable protein according to any one of [15] to [39], wherein the content of fibers having an aspect ratio of 10 or more is 14% or more and 30% or less on a number basis.
[41] The defibrated product of a texturized fibrous vegetable protein according to any one of [15] to [40], wherein the content of fibers having an aspect ratio of 10 or more is 15% or more and 20% or less on a number basis.
[42] The defibrated product of a texturized fibrous vegetable protein according to any one of [15] to [41], wherein the content of fibers having an aspect ratio of 7.5 or more and less than 10 is 20% or more and 90% or less on a number basis.
[43] The defibrated product of a texturized fibrous vegetable protein according to any one of [15] to [42], wherein the content of fibers having an aspect ratio of 7.5 or more and less than 10 is 22% or more and 80% or less on a number basis.
[44] The defibrated product of a texturized fibrous vegetable protein according to any one of [15] to [43], wherein the content of fibers having an aspect ratio of 7.5 or more and less than 10 is 24% or more and 70% or less on a number basis.
[45] The defibrated product of a texturized fibrous vegetable protein according to any one of [15] to [44], wherein the content of fibers having an aspect ratio of 7.5 or more and less than 10 is 25% or more and 60% or less on a number basis.
[46] The defibrated product of a texturized fibrous vegetable protein according to any one of [15] to [45], wherein the content of fibers having a length of less than 10 mm is 0% or more and 20% or less on a number basis.
[47] The defibrated product of a texturized fibrous vegetable protein according to any one of [15] to [46], wherein the content of fibers having a length of less than 10 mm is 0% or more and 15% or less on a number basis.
[48] The defibrated product of a texturized fibrous vegetable protein according to any one of [15] to [47], wherein the content of fibers having a length of less than 10 mm is 0% or more and 10% or less on a number basis.
[49] The defibrated product of a texturized fibrous vegetable protein according to any one of [15] to [48], wherein the content of fibers having a length of less than 10 mm is 0% or more and 5% or less on a number basis.
[50] The defibrated product of a texturized fibrous vegetable protein according to any one of [15] to [49], wherein the content of fibers having a length of 30 mm or more is 2% or more and 100% or less on a number basis.
[51] The defibrated product of a texturized fibrous vegetable protein according to any one of [15] to [50], wherein the content of fibers having a length of 30 mm or more is 3% or more and 50% or less on a number basis.
[52] The defibrated product of a texturized fibrous vegetable protein according to any one of [15] to [51], wherein the content of fibers having a length of 30 mm or more is 5% or more and 40% or less on a number basis.
[53] The defibrated product of a texturized fibrous vegetable protein according to any one of [15] to [52], wherein the content of fibers having a length of 30 mm or more is 7% or more and 30% or less on a number basis.
[54] The defibrated product of a texturized fibrous vegetable protein according to any one of [15] to [53], wherein the content of fibers having a length of 30 mm or more is 10% or more and 20% or less on a number basis.
[55] The defibrated product of a texturized fibrous vegetable protein according to any one of [15] to [54], wherein the content of fibers having a length of 10 mm or more and less than 30 mm is 50% or more and 98% or less on a number basis.
[56] The defibrated product of a texturized fibrous vegetable protein according to any one of [15] to [55], wherein the content of fibers having a length of 10 mm or more and less than 30 mm is 60% or more and 95% or less on a number basis.
[57] The defibrated product of a texturized fibrous vegetable protein according to any one of [15] to [56], wherein the content of fibers having a length of 10 mm or more and less than 30 mm is 70% or more and 92% or less on a number basis.
[58] The defibrated product of a texturized fibrous vegetable protein according to any one of [15] to [57], wherein the content of fibers having a length of 10 mm or more and less than 30 mm is 80% or more and 90% or less on a number basis.
[59] The defibrated product of a texturized fibrous vegetable protein according to any one of [15] to [58], wherein the contained fibers have a number average width of 1 mm or more and 10 mm or less.
[60] The defibrated product of a texturized fibrous vegetable protein according to any one of [15] to [59], wherein the contained fibers have a number average width of 2 mm or more and 8 mm or less.
[61] The defibrated product of a texturized fibrous vegetable protein according to any one of [15] to [60], wherein the contained fibers have a number average width of 3 mm or more and 5 mm or less.
[62] The defibrated product of a texturized fibrous vegetable protein according to any one of [15] to [61], having a water content of 40 mass% or more and 80 mass% or less.
[63] The defibrated product of a texturized fibrous vegetable protein according to any one of [15] to [62], having a water content of 50 mass% or more and 70 mass% or less.
[64] A method for improving defibration resistance of a texturized fibrous vegetable protein, including the step of adding a salt of a monovalent cation in an amount of 0.1 mass% or more and less than 2 mass% with respect to the vegetable protein.
[65] The method for improving defibration resistance of a texturized fibrous vegetable protein according to [64], wherein in the step, the salt of a monovalent cation is added in an amount of 0.2 mass% or more and less than 1.5 mass% with respect to the vegetable protein.
[66] The method for improving defibration resistance of a texturized fibrous vegetable protein according to [64] or [65], wherein in the step, the salt of a monovalent cation is added in an amount of 0.3 mass% or more and less than 1.2 mass% with respect to the vegetable protein.
[67] The method for improving defibration resistance of a texturized fibrous vegetable protein according to any one of [64] to [66], wherein in the step, the salt of a monovalent cation is added in an amount of 0.4 mass% or more and less than 0.8 mass% with respect to the vegetable protein.
[68] The method according to any one of [64] to [67], wherein the vegetable protein is a protein derived from pea.
[69] The method according to any one of [64] to [68], wherein the salt of a monovalent cation is an alkali metal salt.
[70] The method according to [69], wherein the alkali metal salt is a sodium salt.
[71] The method according to [70], wherein the sodium salt is at least one selected from the group consisting of sodium chloride, monosodium glutamate, and sodium carbonate.
[72] The method according to [69], wherein the alkali metal salt is a potassium salt.
[73] The method according to [72], wherein the potassium salt is potassium chloride.

## Claims

1. A texturized fibrous vegetable protein comprising:
a protein derived from pea; and
a salt of a monovalent cation, wherein
the salt of a monovalent cation is comprised in an amount of 0.1 mass% or more and less than 2 mass% with respect to the protein derived from pea.

2. The texturized fibrous vegetable protein according to claim 1, wherein the salt of a monovalent cation is an alkali metal salt.

3. The texturized fibrous vegetable protein according to claim 2, wherein the alkali metal salt is a sodium salt.

4. The texturized fibrous vegetable protein according to claim 3, wherein the sodium salt is at least one selected from the group consisting of sodium chloride, monosodium glutamate, and sodium carbonate.

5. The texturized fibrous vegetable protein according to claim 2, wherein the alkali metal salt is a potassium salt.

6. The texturized fibrous vegetable protein according to claim 5, wherein the potassium salt is potassium chloride.

7. The texturized fibrous vegetable protein according to claim 1 or 2, having a water content of 10 mass% or less.

8. The texturized fibrous vegetable protein according to claim 1 or 2, which does not comprise a protein derived from soybean.

9. A defibrated product of the texturized fibrous vegetable protein according to claim 1 or 2.

10. A defibrated product of a texturized fibrous vegetable protein comprising:
a protein derived from pea; and
a salt of a monovalent cation, wherein
the salt of a monovalent cation is comprised in an amount of 0.1 mass% or more and less than 2 mass% with respect to the protein derived from pea.

11. The defibrated product of a texturized fibrous vegetable protein according to claim 10, wherein the salt of a monovalent cation is an alkali metal salt.

12. The defibrated product of a texturized fibrous vegetable protein according to claim 11, wherein the alkali metal salt is a sodium salt.

13. The defibrated product of a texturized fibrous vegetable protein according to claim 12, wherein the sodium salt is at least one selected from the group consisting of sodium chloride, monosodium glutamate, and sodium carbonate.

14. The defibrated product of a texturized fibrous vegetable protein according to claim 11, wherein the alkali metal salt is a potassium salt.

15. The defibrated product of a texturized fibrous vegetable protein according to claim 14, wherein the potassium salt is potassium chloride.

16. The defibrated product of a texturized fibrous vegetable protein according to claim 10 or 11, which does not comprise a protein derived from soybean.

17. The defibrated product of a texturized fibrous vegetable protein according to claim 10 or 11, wherein contained fibers have a number average length of 18 mm or more.

18. The defibrated product of a texturized fibrous vegetable protein according to claim 10 or 11, wherein a content of fibers having an aspect ratio of less than 7.5 is 70% or less on a number basis.

19. The defibrated product of a texturized fibrous vegetable protein according to claim 10 or 11, wherein a content of fibers having an aspect ratio of 10 or more is 10% or more on a number basis.

20. The defibrated product of a texturized fibrous vegetable protein according to claim 10 or 11, wherein a content of fibers having an aspect ratio of 7.5 or more and less than 10 is 20% or more and 90% or less on a number basis.

21. The defibrated product of a texturized fibrous vegetable protein according to claim 10 or 11, wherein a content of fibers having a length of less than 10 mm is 20% or less on a number basis.

22. The defibrated product of a texturized fibrous vegetable protein according to claim 10 or 11, wherein a content of fibers having a length of 30 mm or more is 2% or more on a number basis.

23. The defibrated product of a texturized fibrous vegetable protein according to claim 10 or 11, wherein a content of fibers having a length of 10 mm or more and less than 30 mm is 50% or more and 98% or less on a number basis.

24. The defibrated product of a texturized fibrous vegetable protein according to claim 10 or 11, wherein a contained fibers have a number average width of 1 mm or more and 10 mm or less.

25. The defibrated product of a texturized fibrous vegetable protein according to claim 10 or 11, having a water content of 40 mass% or more and 80 mass% or less.

26. A method for improving defibration resistance of a texturized fibrous vegetable protein, comprising the step of adding a salt of a monovalent cation in an amount of 0.1 mass% or more and less than 2 mass% with respect to the vegetable protein.

27. The method according to claim 26, wherein the vegetable protein is a protein derived from pea.

28. The method according to claim 26 or 27, wherein the salt of a monovalent cation is an alkali metal salt.

29. The method according to claim 28, wherein the alkali metal salt is a sodium salt.

30. The method according to claim 29, wherein the sodium salt is at least one selected from the group consisting of sodium chloride, monosodium glutamate, and sodium carbonate.

31. The method according to claim 28, wherein the alkali metal salt is a potassium salt.

32. The method according to claim 31, wherein the potassium salt is potassium chloride.
